# EUROPÄISCHE PATENTSCHRIFT

(11) **EP 0 717 669 B1**
(45) Veröffentlichungstag und Bekanntmachung des Hinweises auf die Patenterteilung: **28.04.1999**
(21) Anmeldenummer: 94924875.1
(22) Anmeldetag: 13.08.1994
(51) Int. Cl.: B23B 3/16, B23Q 1/01

(54) **VERFAHREN ZUM BEARBEITEN EINES WERKSTÜCKES AUF EINEM CNC-DREHAUTOMATEN SOWIE CNC-DREHAUTOMAT**
WORKPIECE MACHINING PROCESS ON A NC AUTOMATIC LATHE AND NC AUTOMATIC LATHE
DISPOSITIF D'USINAGE DE PIECES SUR UN TOUR AUTOMATIQUE A COMMANDE NUMERIQUE ET TOUR AUTOMATIQUE A COMMANDE NUMERIQUE

(30) Priorität: 11.09.1993 DE 4330858
(43) Veröffentlichungstag der Anmeldung: 26.06.1996
(73) Patentinhaber: INDEX-WERKE GMBH & CO. KG HAHN & TESSKY, 73730 Esslingen (DE)
(72) Erfinder: GROSSMANN, Walter, D-73666 Baltmannsweiler (DE)
(74) Vertreter: Hoeger, Stellrecht & Partner
(86) Internationale Anmeldenummer: EP9402710
(87) Internationale Veröffentlichungsnummer: WO9507158

(56) Entgegenhaltungen:
- EP-A- 0 538 515
- DE-A- 3 328 327

## Beschreibung

Die Erfindung betrifft ein Verfahren zum Bearbeiten eines Werkstücks mittels eines drehantreibbaren Bearbeitungswerkzeuges auf einem CNC-Drehautomaten, mit den Merkmalen des Oberbegriffs des Anspruchs 1 (siehe DE-A-4 105 768).

Die Erfindung betrifft ferner einen CNC-Drehautomaten mit den Merkmalen des Oberbegriffs des Anspruchs 3 (siehe DE-A-41 05 768). Derartige Drehmaschinen werden immer häufiger als Drehbearbeitungszentren gestaltet, die außer der reinen Drehbearbeitung des rotierenden Werkstücks mit einem feststehenden Werkzeug auch Bearbeitungsvorgänge mit einem rotierenden Werkzeug durchführen können, bei denen sich das Werkstück entweder gar nicht oder langsam dreht. Typische derartige Bearbeitungsvorgänge mit Hilfe eines rotierenden Werkzeugs sind das Fräsen, Bohren, Schleifen und dergleichen, bei denen die herzustellenden Werkstückkonturen auch in unterschiedlichster Weise orientiert sein können, so daß sich z. B. eine nicht radial zur Rotationsachse des Werkstücks verlaufende Bohrung herstellen läßt.

Zur Vereinfachung der weiteren Erläuterungen und der Formulierung der beiliegenden Ansprüche sollen zunächst einige Begriffe in der für Drehmaschinen üblichen Weise definiert werden:
- Z-Achse =: Richtung der Werkstückspindelachse (wobei die positive Richtung der Z-Achse die von der Werkstückspindel wegweisende Richtung ist);
- X-Achse =: Vorschubrichtung eines Drehwerkzeugs in bezüglich der Werkstückspindelachse radialer Richtung (wobei die positive Richtung der X-Achse von der Werkstückspindelachse wegweist);
- Zerspanungsebene =: durch die Z- und X-Achsen definierte, die Werkstückspindelachse enthaltende Ebene;
- Y-Achse =: in einer senkrecht zur Z-Achse verlaufenden Ebene liegende Vorschubrichtung eines Werkzeugs quer und insbesondere exakt senkrecht zur Zerspanungsebene (wobei die positive Richtung der Y-Achse von einem das Werkzeug haltenden Schlittensystem zur Zerspanungsebene weist);
- lineare Achse =: Richtung, in der eine Maschinenkomponente gesteuert und unter Messung des zurückgelegten Wegs bzw. laufender Erfassung der momentanen Position verschiebbar ist (die X-, Y- und Z-Achsen sind solche lineare Achsen);
- rotatorische Achse =: Achse, um die eine Maschinenkomponente gesteuert und unter laufender Erfassung der momentanen Drehwinkelposition drehbar ist;
- C-Achse =: in Richtung der Z-Achse verlaufende rotatorische Achse der Werkstückspindel;
- B-Achse =: in Richtung der Y-Achse verlaufende rotatorische Achse eines Werkzeugträgers.

Für einfache Fräs- und Bohrarbeiten und dergleichen kann es ausreichend sein, wenn die das Werkstück haltende Werkstückspindel mit einer Bremse oder dergleichen zum Festhalten der Werkstückspindel versehen ist; je nach Komplexität der Werkstücke benötigt der Drehautomat aber außer einer X- und einer Z-Achse auch noch eine Y-Achse und/oder eine B-Achse und/oder eine C-Achse.

Bei solchen Drehmaschinen werden die verschiedenen Werkzeuge - feststehende Werkzeuge für die Drehbearbeitung und aufgrund eines entsprechenden Antriebs rotierende Werkzeuge für das Bohren, Fräsen und dergleichen - üblicherweise an einem Werkzeugträger in Gestalt eines sogenannten Werkzeugrevolvers angeordnet, und die heutzutage gebräuchlichste Form eines solchen Werkzeugrevolvers ist der sogenannte Scheibenrevolver, der sich, damit sich jedes Werkzeug in Arbeitsposition bringen läßt, um eine Revolverachse gesteuert drehen läßt, welche parallel zur Werkstückspindelachse verläuft, jedenfalls bei einer Drehmaschine ohne B-Achse bzw. bei einer Drehmaschine mit B-Achse in der Grundstellung des Werkzeugrevolvers, in der von der B-Achse noch kein Gebrauch gemacht wurde.

Eine Z-Achse kann dadurch verwirklicht werden, daß der die Werkstückspindel haltende Spindelstock der Drehmaschine in Richtung der Z-Achse verschiebbar ist und/oder daß ein den Werkzeugträger haltendes Schlittensystem einen in Richtung der Z-Achse verfahrbaren Schlitten umfaßt, wobei letzteres aus Stabilitätsgründen und im Hinblick auf einen möglichst einfachen Maschinenaufbau zu bevorzugen ist.

Bei bekannten Drehautomaten der geschilderten Art liegt der für die Bearbeitung zur Verfügung stehende und in Richtung der Y-Achse verlaufende Verfahrweg eines Werkzeugs jeweils zur Hälfte auf den beiden Seiten der Zerspanungsebene, damit sich ein Werkstück - in Richtung der Werkstückspindelachse gesehen und bezogen auf die Zerspanungsebene - außermittig bezüglich der Zerspanungsebene in beiden Richtungen mit gleichem maximalem Abstand bearbeiten läßt. Dies bedingt aber einen verhältnismäßig großen Abstand der Zerspanungsebene vom Maschinenbett bzw. dem einen oder mehrere Schlitten zum Tragen des Werkzeugträgers haltenden und führenden Schlittenbett, bei dem es sich um einen Teil des Maschinenbetts handelt, wobei dieser Abstand z. B. 50 % des maximal in Richtung der Y-Achse möglichen Verfahrwegs eines Bearbeitungswerkzeugs bzw. des Werkzeugrevolvers beträgt, um eine ausreichende Verschiebung des Werkzeugs bzw. des Werkzeugrevolvers in negativer Richtung der Y-Achse, d. h. in Richtung auf das Maschinenbett bzw. das Schlittenbett zu ermöglichen. Ein solcher verhältnismäßig großer Abstand führt aber zu einer Verringerung der Steifigkeit der Maschinenkonstruktion, da er sowohl einen verhältnismäßig großen Abstand eines arbeitenden Drehwerkzeugs vom Maschinenbett bzw. Schlittenbett, als auch einen verhältnismäßig großen Abstand der Arbeitsspindel vom Maschinenbett bzw. Schlittenbett bedingt, wodurch die Bearbeitungspräzision beeinträchtigt und die zur Verfügung stehende maximale Zerspanungsleistung beim Drehen vermindert wird, jedenfalls bei Drehmaschinen, bei denen die Relativbewegungen zwischen zu bearbeitendem Werkstück und arbeitendem Werkzeug in Richtung der X- und der Y-Achse vom Werkzeugträger durchgeführt werden, ein Umstand, der bei allen Drehmaschinen unvermeidlich ist, die einen sogenannten Reitstock, eine Lünette und/oder eine Werkstoffstangenzuführvorrichtung besitzen, durch die der Werkstückspindel in Richtung der Werkstückspindelachse stangenförmiges Rohmaterial zur Herstellung der Werkstücke zugeführt wird.

Die Erfindung befaßt sich nun mit einem Verfahren zum Bearbeiten eines Werkstückes mittels eines drehantreibbaren Bearbeitungswerkzeuges auf einem CNC-Drehautomaten sowie mit einem solchen Drehautomaten, welcher aufweist einen Spindelstock, in dem eine Werkstückspindel zum Halten eines zu bearbeitenden Werkstücks um eine Werkstückspindelachse drehbar gelagert ist, einen ein Festhalten der Werkstückspindel ermöglichenden Werkstückspindelantrieb und ein stationäres Schlittenbett, an dem mindestens ein Werkzeugträger-Schlittensystem gehalten ist, welches einen sowohl in Richtung der X-Achse als auch in Richtung der Y-Achse verschiebbaren Schlitten umfaßt, der einen Werkzeugträger in Form eines mehrere Werkzeugstationen aufweisenden Werkzeugrevolvers trägt, welcher um eine zur Z-Achse parallele Revolverachse gesteuert drehbar sowie in einer Vielzahl von Drehwinkelpositionen festlegbar ist und von dessen Werkzeugstationen mindestens eine mit einem senkrecht zur Revolverachse orientierten, durch Drehen des Werkzeugrevolvers in eine Arbeitsposition bringbaren drehantreibbaren Bearbeitungswerkzeug bestückbar ist, wobei Werkstückspindel und Werkzeugrevolver in Richtung der Z-Achse relativ zueinander verschiebbar sind. Soll mit einem solchen Drehautomaten ein Werkstück mittels eines angetriebenen Werkzeugs bearbeitet werden, kann der Werkzeugrevolver mit rotierendem sowie seine Ausrichtung beibehaltendem Werkzeug in einer von der Richtung der Z-Achse abweichenden Richtung verschoben und dabei mit dem Werkzeug auf das Werkstück eingewirkt werden.

Ein solcher Drehautomat ist aus der DE-41 05 768-Al bekannt. Es handelt sich dabei um eine Schrägbett-Maschine mit einem oberen, als Werkzeugrevolver ausgebildeten Werkzeugträger auf einem oberen Kreuzschlittensystem, welches einen Z-Schlitten als Unter- oder Bettschlitten und einen X-Schlitten als Oberschlitten umfaßt, und mit einem unteren, gleichfalls als Werkzeugrevolver ausgebildeten Werkzeugträger, welcher auf einem Schlittensystem angeordnet ist, das einen Z-Schlitten als Bett- bzw. Unterschlitten, einen von letzterem getragenen Y-Schlitten und einen auf diesem geführten und den Werkzeugrevolver tragenden X-Schlitten umfaßt. Für den unteren Werkzeugrevolver verläuft die durch die Werkstückspindelachse und die Richtung der X-Achse definierte Zerspanungsebene horizontal, d. h. schräg zur Oberseite des Schrägbettes, während die Y-Achse parallel zur Oberseite des Schrägbettes verläuft und infolgedessen die durch die Revolverachse verlaufende Richtung der Y-Achse mit dem von der Seite des Schrägbetts her auf die Zerspanungsebene gefällten Lot einen spitzen Winkel β bildet, welcher auf der von der Werkstückspindelachse abgewandten Seite dieses Lotes liegt und ca. 45° beträgt.

Diese bekannte Maschinenkonstruktion führt zu folgenden Nachteilen: Der dem unteren Werkzeugrevolver zugeordnete Y-Schlitten muß notwendigerweise eine große Ausladung haben, was sich auf die Steifigkeit der Maschine und damit auf die Präzision der mit ihr hergestellten Werkstücke nachteilig auswirkt. Ferner kann der untere Werkzeugrevolver - bezogen auf die Werkstückspindel - dem oberen Werkzeugrevolver nicht diagonal gegenüberliegen, weshalb sich bei einer 4-Achsen-Drehbearbeitung die Querkräfte, welche das Werkstück aus der Drehachse drücken können, nicht gegenseitig aufheben können. Schließlich bedingt eine Vorschubbewegung in Richtung der klassischen Y-Achse (senkrecht zur Zerspanungsebene) stets gleichzeitige und miteinander korrelierte Vorschubbewegungen des Y-Schlittens sowie des X-Schlittens; aus zwei korrelierten Achsbewegungen resultierende Bewegungen sind aber bei einer NC- bzw. einer CNC-gesteuerten Maschine stets weniger genau (nämlich treppenstufenförmig) als rein lineare Bewegungen. Auch läßt es das bekannte Konstruktionsprinzip unmöglich erscheinen, dem unteren Werkzeugrevolver eine B-Achse (gesteuerte Rotationsbewegung um die Y-Achse) zuzuordnen.

Der Erfindung liegt nun die Aufgabe zugrunde, bei einem Verfahren zum Bearbeiten eines Werkstücks mittels eines drehantreibbaren Bearbeitungswerkzeugs auf einem CNC-Drehautomaten der vorstehend definierten Gattung, welches ein Verlagern dieses Bearbeitungswerkzeuges in Richtung der Y-Achse erforderlich macht, zumindest nicht den gesamten Verschiebeweg in Richtung der Y-Achse durch ein Verschieben eines den Werkzeugrevolver tragenden Schlittens in Richtung der Y-Achse bewirken zu müssen, was sich bei einem Verfahren gemäß dem Oberbegriff des Anspruchs 1 erfindungsgemäß dadurch bewerkstelligen läßt, daß vor dem Arbeiten mit dem drehantreibbaren Bearbeitungswerkzeug der Werkzeugrevolver derart um die Revolverachse gedreht wird, daß die Rotationsachse des dem Werkstück zugewandten Bearbeitungswerkzeugs mit einer von den Richtungen der Z-Achse und der X-Achse definierten sowie die Revolverachse enthaltenden Ebene (Zerspanungsebene) einen spitzen Winkel bildet, welcher auf der dem Schlittenbett zugewandten Seite dieser Ebene liegt, worauf zur Werkstückbearbeitung die Verschiebung des Werkzeugrevolvers erfolgt.

Ein solches Bearbeitungsverfahren erlaubt es zunächst einmal, z. B. beim Herstellen einer außermittigen Bohrung auf einem Drehautomaten zu arbeiten, dessen Werkzeugrevolver nicht über eine klassische Y-Achse verfügt. Wenn aber eine solche Y-Achse vorhanden ist, können Werkstücke mit höherer Genauigkeit hergestellt werden, wie sich aus dem folgenden noch ergeben wird. Außerdem läßt sich gegebenenfalls auch eine Verringerung der nicht bearbeitungswirksamen Nebenzeiten erreichen, da der Werkzeugrevolver schon dann, wenn er um die Revolverachse weitergeschaltet wird, um das später einzusetzende drehantreibbare Bearbeitungswerkzeug dem zu bearbeitenden Werkstück zuzuwenden, so eingestellt werden kann, daß die Werkzeugachse mit der Zerspanungsebene den genannten Winkel bildet.

Aus der DE-A-33 28 327 ergibt sich bereits ein CNC-Drehautomat mit einem Werkzeugrevolver, dessen Revolverachse parallel zur Z-Achse verläuft und der sich mit bezüglich der Revolverachse radial orientierten, drehantreibbaren Werkzeugen bestücken läßt, mit einem als Bettschlitten gestalteten X-Schlitten und einem von letzterem getragenen Z-Schlitten, auf dem der Werkzeugrevolver angebracht ist, wobei eine Y-Achse dadurch simuliert wird, daß während der Werkstückbearbeitung mit einem rotierenden Werkzeug, z. B. einem Fräser, der Werkzeugrevolver um die Revolverachse und das Werkstück um die Werkstückspindelachse gleichzeitig, gleichsinnig und mit gleicher Winkelgeschwindigkeit gedreht werden und außerdem währenddessen der Werkzeugrevolver quer zur Werkstückspindelachse verfahren wird. Wie die Fig. 3 der DE-A-33 28 327 erkennen läßt, wird bei diesem Drehautomaten, soll mittels eines Fräsers an einem Werkstück eine Fläche erzeugt werden, welche parallel zur Z-Achse verläuft, vor Beginn des Bearbeitungsvorgangs die Rotationsachse des Werkzeugs aus der Zerspanungsebene herausgeschwenkt

Wird das erfindungsgemäße Bearbeitungsverfahren auf einem Drehautomaten durchgeführt, dessen Werkzeugrevolver über eine echte Y-Achse verfügt, kann auf einen vorstehend beschriebenen Interpolationsvorgang in der Maschinensteuerung dann verzichtet werden, wenn der Werkzeugrevolver derart um die Revolverachse gedreht wird, daß die Werkzeugrotationsachse senkrecht zur Y-Achse verläuft, worauf zur Werkstückbearbeitung der Werkzeugrevolver in Richtung der Y-Achse oder senkrecht hierzu verschoben wird, um z. B. eine zur Werkstückachse parallele Fläche zu fräsen oder eine senkrecht zur Werkstückachse orientierte Bohrung herzustellen.

Der Erfindung liegt ferner die Aufgabe zugrunde, einen CNC-Drehautomaten mit den Merkmalen des Oberbegriffs des Anspruchs 3, d. h. einen CNC-Drehautomaten der vorstehend definierten Gattung, bei dem die durch die Revolverachse verlaufende Richtung der Y-Achse mit dem Lot durch die Revolverachse auf die von der Werkstückspindelachse und der X-Achse definierte Zerspanungsebene auf der dem Schlittenbett zugewandten Seite der Zerspanungsebene einen spitzen Winkel β bildet, welcher auf der von der Werkstückspindelachse abgewandten Seite dieses Lots liegt sowie größer als 0° ist und höchstens 45° beträgt, so zu gestalten, daß er trotz des Vorhandenseins einer Y-Achse eine präzisere Werkstückbearbeitung erlaubt als bekannte derartige Drehautomaten mit Y-Achse, d. h. daß die Steifigkeit der Maschinenkonstruktion zumindest nicht nennenswert geringer ist als bei derartigen Drehautomaten ohne Y-Achse.

Diese Aufgabe wird bei einem Drehautomaten mit den Merkmalen des Oberbegriffs des Anspruchs 3 erfindungsgemäß dadurch gelöst, daß der Drehautomat und seine CNC-Steuerung derart ausgebildet sind, daß für eine außermittige Werkstückbearbeitung mit dem drehantreibbaren Bearbeitungswerkzeug, während welcher die Werkzeugrotationsachse zumindest zeitweise die Werkstückspindelachse nicht schneidet, das Bearbeitungswerkzeug eine Arbeitsposition einnimmt, in der seine Rotationsachse mit der Zerspanungsebene auf der dem Schlittenbett zugewandten Seite der Zerspanungsebene und des genannten Lots einen spitzen Winkel γ bildet.

Wenn vorstehend davon die Rede ist, daß die Revolverachse parallel zur Z-Achse verläuft, so gilt dies natürlich nur für Drehautomaten ohne B-Achse bzw. bei Maschinen mit B-Achse nur für die Grundstellung des Werkzeugrevolvers, in der ein Schwenken des Werkzeugrevolvers um die B-Achse noch nicht stattgefunden hat.

Eine erfindungsgemäße Maschinenkonstruktion erlaubt es zunächst einmal, z. B. beim Fräsen zumindest einen Teil des negativen Y-Weges (des auf der dem Schlittenbett zugewandten Seite der Zerspanungsebene liegenden Verschiebewegs des rotierenden Bearbeitungswerkzeugs) durch Verdrehen des Werkzeugrevolvers um seine Revolverachse zurückzulegen, was es im Vergleich zu bekannten Drehautomaten mit Y-Achse ermöglicht, die Werkstückspindel in geringerem Abstand vom Maschinenbett bzw. Schlittenbett anzuordnen und den Abstand eines arbeitenden Drehwerkzeugs vom Maschinenbett bzw. Schlittenbett zu verringern (jeweils senkrecht zur Zerspanungsebene gemessen).

Des weiteren führt das Verschwenken der Y-Achse gegenüber dem Lot auf die Zerspanungsebene dazu, daß für diejenigen, zwischen dem Schlittenbett und dem Y-Schlitten liegenden Teile des den Werkzeugrevolver tragenden Schlittensystems mehr Raum zur Verfügung steht (in Richtung der Z-Achse gesehen senkrecht zu der das Schlittensystem haltenden Seite des Schlittenbetts), insbesondere für einen am Schlittenbett in Richtung der Z-Achse verschiebbar geführten Bettschlitten.

Wie sich aus dem Folgenden noch ergeben wird, kann der Grundgedanke der Erfindung auch so definiert werden, daß die Werkzeug-Vorschubrichtungen (Zerspanungsrichtungen) für Drehwerkzeuge und für rotierende Bearbeitungswerkzeuge unterschiedlich gewählt werden - für das Drehen sind es eine bezüglich der Werkstückspindelachse radiale Richtung und die Richtung der Werkstückspindelachse, wobei diese beiden Richtungen die Zerspanungsebene definieren, in der die Werkstückspindelachse liegt; für eine Bearbeitung mit einem rotierenden Werkzeug sind es eine zur Zerspanungsebene schräge, im Sinne einer Verkleinerung des Werkstückdurchmessers wirksame Vorschubrichtung, eine senkrecht zu letzterer und zur Werkstückspindelachse verlaufende Vorschubrichtung und eine zur Werkstückspindelachse parallele Vorschubrichtung. Die unterschiedlichen Vorschubrichtungen für Drehwerkzeuge bzw. rotierende Bearbeitungswerkzeuge resultieren aus den unterschiedlichen Winkelpositionen des Werkzeugrevolvers, in denen sich ein Drehwerkzeug bzw. ein rotierendes Bearbeitungswerkzeug im Einsatz befindet, wobei die im Sinne einer Verkleinerung des Werkstückdurchmessers wirksame Vorschubrichtung eines rotierenden Bearbeitungswerkzeugs sich aus der im selben Sinne wirksamen Vorschubrichtung eines Drehwerkzeugs durch Drehen des Werkzeugrevolvers um die Revolverachse ergibt, und zwar im Sinne einer Annäherung des bearbeitungswirksamen Bereichs eines rotierenden Bearbeitungswerkzeugs an das Maschinenbett bzw. Schlittenbett (gemessen in Richtung senkrecht zu der für einen Drehvorgang definierten Zerspanungsebene).

Wenn vorstehend davon die Rede ist, daß ein sich in Arbeitsposition befindliches drehantreibbares Bearbeitungswerkzeug mit seiner Rotationsachse aus der Zerspanungsebene heraus in Richtung auf das Schlittensystem geschwenkt wird, so ist in diesem Falle unter der Arbeitsposition des drehantreibbaren Bearbeitungswerkzeugs nicht diejenige Drehwinkelstellung zu verstehen, in der das rotierende Bearbeitungswerkzeug tatsächlich arbeitet, sondern die Drehwinkelposition eines arbeitenden, an die Stelle des drehantreibbaren Bearbeitungswerkzeugs tretenden Drehwerkzeugs.

Bei bevorzugten Ausführungsformen des erfindungsgemäßen Drehautomaten ist der Winkel β verhältnismäßig klein und beträgt ungefähr 10° bis ungefähr 30°, da ein solcher Winkel für die Erzielung der vorstehend erwähnten Vorteile üblicherweise völlig ausreicht. Besonders bevorzugt werden Ausführungsformen, bei denen der Winkel β kleiner ist als der Drehwinkelabstand zweier einander benachbarter Werkzeugstationen des Werkzeugrevolvers, der z. B. bei einem Werkzeugrevolver mit zwölf Werkzeugstationen 30° beträgt; besonders empfohlen wird eine Bemessung des Winkels β derart, daß er, insbesondere bei einem Werkzeugrevolver mit zwölf Werkzeugstationen, ungefähr 2/3 dieses Drehwinkelabstands beträgt.

Weicht der Winkel γ, um den die Rotationsachse eines drehantreibbaren Bearbeitungswerkzeugs aus der Zerspanungsebene herausgeschwenkt wird, vom Neigungswinkel der Y-Achse ab, d. h. vom Neigungswinkel der Führungsrichtung des Y-Schlittens gegenüber dem Lot auf die für ein Drehwerkzeug definierte Zerspanungsebene, müssen beim Arbeiten mit einem rotierenden Bearbeitungswerkzeug, soll dieses in einer Richtung senkrecht zu seiner Rotationsachse und senkrecht zur Z-Achse vorgeschoben werden, sowohl der X-, als auch der Y-Schlitten gleichzeitig in aufeinander abgestimmter Weise verschoben werden, was bei einem CNC-Drehautomaten durch Interpolation innerhalb der CNC-Steuerung bewerkstelligt werden kann. Besonders bevorzugt werden aber Ausführungsformen, bei denen die Winkel β und γ gleich groß sind, da es dann für den beschriebenen Bearbeitungsvorgang genügt, nur den Y-Schlitten zu verschieben; ein Interpolationsvorgang kann dann entfallen, und es ergeben sich dann z. B. beim Fräsen Oberflächen besserer Qualität. Erfordert ein Bearbeitungsvorgang hingegen einen Werkzeugvorschub in Richtung der Werkzeugachse, wie dies z. B. beim Bohren erforderlich ist, müssen auch bei gleich großen Winkeln β und γ der X-Schlitten und der Y-Schlitten aufeinander abgestimmte Bewegungen durchführen.

Damit mit einem erfindungsgemäßen Drehautomaten unter Einsatz eines rotierenden Werkzeugs auch bezüglich der Werkstückspindelachse schräg verlaufende Flächen, Bohrungen oder dergleichen hergestellt werden können, empfiehlt es sich, den Drehautomaten mit einer B-Achse zu versehen, was sich am einfachsten dadurch verwirklichen läßt, daß das Schlittensystem mit einem Y-Schlitten versehen wird, welcher als Pinole ausgebildet ist und den Werkzeugrevolver trägt, und daß ein Antrieb für ein gesteuertes Drehen des Werkzeugrevolvers um eine zur Y-Achse parallele Achse vorgesehen wird, so daß der Werkzeugrevolver mit einer B-Achse versehen ist. In diesem Fall muß die Konstruktion so gestaltet werden, daß die Rotationsachse eines arbeitenden rotierenden Bearbeitungswerkzeugs senkrecht zur Führungsrichtung des Y-Schlittens orientiert ist.

Im folgenden sollen die Erfindung und ihre Vorteile noch näher erläutert werden, und zwar anhand der beigefügten zeichnerischen Darstellung zweier besonders vorteilhafter Ausführungsformen des erfindungsgemäßen Drehautomaten; in der Zeichnung zeigen:
- Fig. 1: eine stark vereinfachte Stirnansicht der ersten Ausführungsform dieses Drehautomaten, gesehen in Richtung der Z- bzw. Werkstückspindelachse, wobei der X-Schlitten des den oberen Werkzeugrevolver tragenden Schlittensystems aufgebrochen wurde, um den Y-Achsantrieb für den Y-Schlitten darzustellen;
- Fig. 2: eine Draufsicht auf das obere Schlittensystem, wiederum mit aufgebrochenem X-Schlitten, gesehen in Richtung des Doppelpfeils Xₐ aus Fig. 1, und zwar samt oberem Werkzeugrevolver;
- Fig. 3: den oberen Werkzeugrevolver, wobei der den Revolverkopf tragende Revolverkörper aufgebrochen wurde, um die den Revolverkopf um die Revolverachse drehende Antriebsvorrichtung zeigen zu können;
- Fig. 4: einen Ausschnitt aus Fig. 1, wobei der obere Werkzeugrevolver samt Teilen des diesen tragenden Schlittensystems und ein von der Werkstückspindel gehaltenes Werkstück während der Bearbeitung mit einem vom Werkzeugrevolver getragenen Drehwerkzeug dargestellt wurden;
- Fig. 5: eine der Fig. 4 entsprechende Darstellung während der Bearbeitung eines Werkstücks mit einem drehantreibbaren Bearbeitungswerkzeug in Form eines Fräsers;
- Fig. 6: eine der Fig. 1 entsprechende Darstellung der zweiten Ausführungsform;
- Fig. 7: eine der Fig. 4 entsprechende Darstellung der zweiten Ausführungsform;
- Fig. 8: eine der Fig. 5 entsprechende Darstellung der zweiten Ausführungsform;
- Fig. 9: den vorderen Teil der Werkstückspindel mit einem von dieser gehaltenen Werkstück sowie den Werkzeugrevolver der zweiten Ausführungsform beim Fräsen einer Schrägfläche, und zwar gesehen in Richtung des rechten Pfeils Yₐ aus Fig. 6;
- Fig. 10: eine stark vereinfachte und schematisierte Darstellung eines Teils des Drehautomaten nach Fig. 1 zur Darstellung von dessen Spindelstock sowie zur Erläuterung der C-Achse dieses Drehautomaten, und
- Fig. 11: einen gleichfalls stark vereinfachten und schematisierten Schnitt durch einen Werkzeugrevolver, wie er in dem erfindungsgemäßen Drehautomaten verwendet werden kann, und zwar zur Darstellung einer Antriebsvorrichtung, mit der sich ein von diesem Werkzeugrevolver gehaltenes drehantreibbares Bearbeitungswerkzeug antreiben läßt.

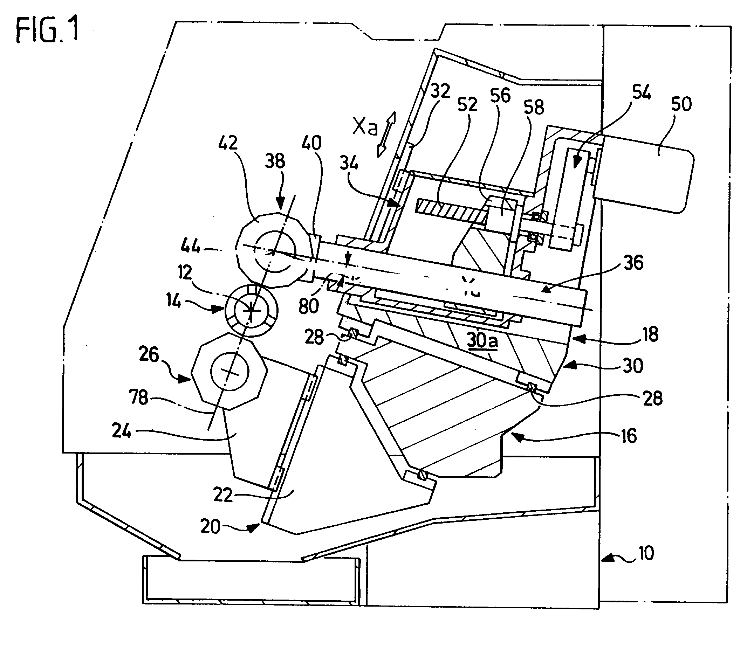

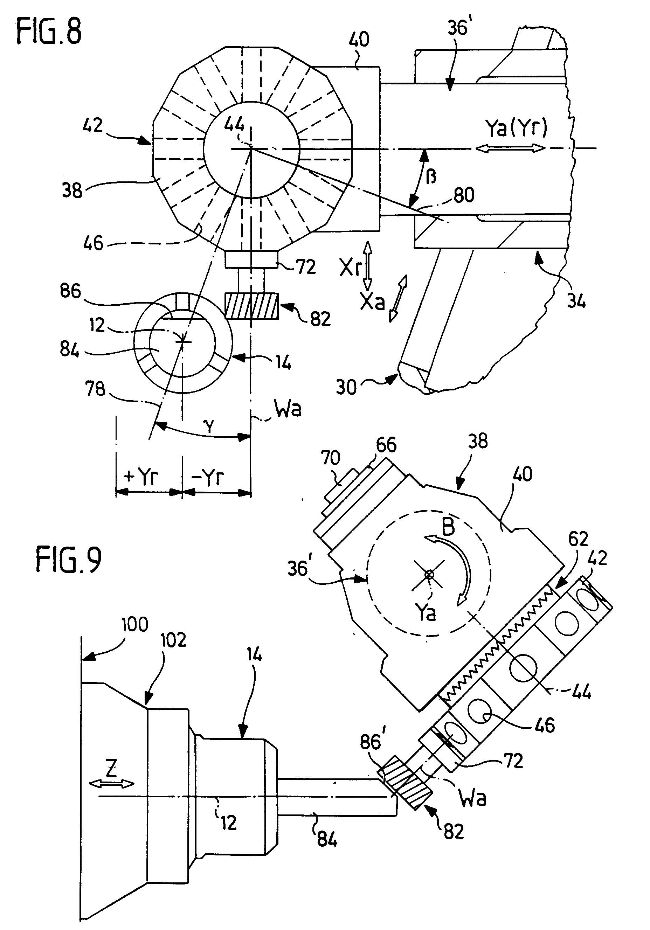

Die Fig. 1 zeigt ein Maschinengestell 10, das einen in Fig. 1 nicht dargestellten und in Fig. 9 für die zweite Ausführungsform lediglich angedeuteten Spindelstock 100 trägt, in dem eine Werkstückspindel 102 (siehe Fig. 9) mit zur Zeichnungsebene der Fig. 1 senkrechter Achse um letztere drehbar gelagert ist; die Fig. 1 zeigt die Werkstückspindelachse 12 und ein an dem dem Betrachter zugewandten Ende der Werkstückspindel befestigtes Spannfutter 14 zum Halten eines zu bearbeitenden Werkstücks derart, daß es bei angetriebener Werkstückspindel um die Werkstückspindelachse 12 rotiert.

Wie bereits erwähnt, definiert die Richtung der Werkstückspindelachse 12 die Richtung der Z-Achse, welche infolgedessen gleichfalls senkrecht zur Zeichnungsebene der Fig. 1 orientiert ist.

Am Maschinengestell 10 ist ein Schlittenbett 16 befestigt, dessen Querschnittsform die Fig. 1 wiedergibt und das sich in Richtung der Z-Achse erstreckt. Die Oberseite des Schlittenbetts 16 trägt ein oberes Schlittensystem 18, und an der Unterseite des Schlittenbetts hängt ein unteres Schlittensystem 20, welches jedoch nicht Gegenstand der vorliegenden Erfindung ist. Es soll nur kurz darauf hingewiesen werden, daß das untere Schlittensystem 20 einen am Schlittenbett 16 in Richtung der Z-Achse verschiebbar geführten Z- oder Bettschlitten 22 und einen am Bettschlitten in Richtung der in Fig. 1 durch den Doppelpfeil Xₐ angedeuteten X-Achse verschiebbar geführten X-Schlitten 24 umfaßt, an dem ein unterer Werkzeugrevolver 26 angebracht ist.

Soweit der Drehautomat bislang beschrieben wurde, ist er mit bekannten derartigen Drehautomaten identisch, so daß es auch nicht erforderlich ist, auf mit den bislang beschriebenen Teilen zusammenhängende Einzelheiten einzugehen.

Das obere Schlittensystem 18 besitzt einen mit Hilfe bekannter Linearführungen 28 am Schlittenbett 16 gehaltenen und in Richtung der Z-Achse verschiebbar geführten Z- bzw. Bettschlitten 30, dessen Grundkörper 30a erfindungsgemäß einen ungefähr keilförmigen Querschnitt aufweist, so daß er mit zunehmendem Abstand von der Werkstückspindelachse 12 eine größere Bauhöhe besitzt. An diesem Z-Schlitten sind in Richtung der Xₐ-Achse verlaufende Linearführungen 32 befestigt, mit deren Hilfe ein X-Schlitten 34 am Z-Schlitten 30 in Richtung dieser Xₐ-Achse verschiebbar geführt und gehalten ist. Dieser X-Schlitten 34 bildet eine Führung für einen als sogenannte Pinole ausgebildeten Y-Schlitten 36, so daß dieser am X-Schlitten in Richtung der durch einen Doppelpfeil angedeuteten Yₐ-Achse verschiebbar geführt ist.

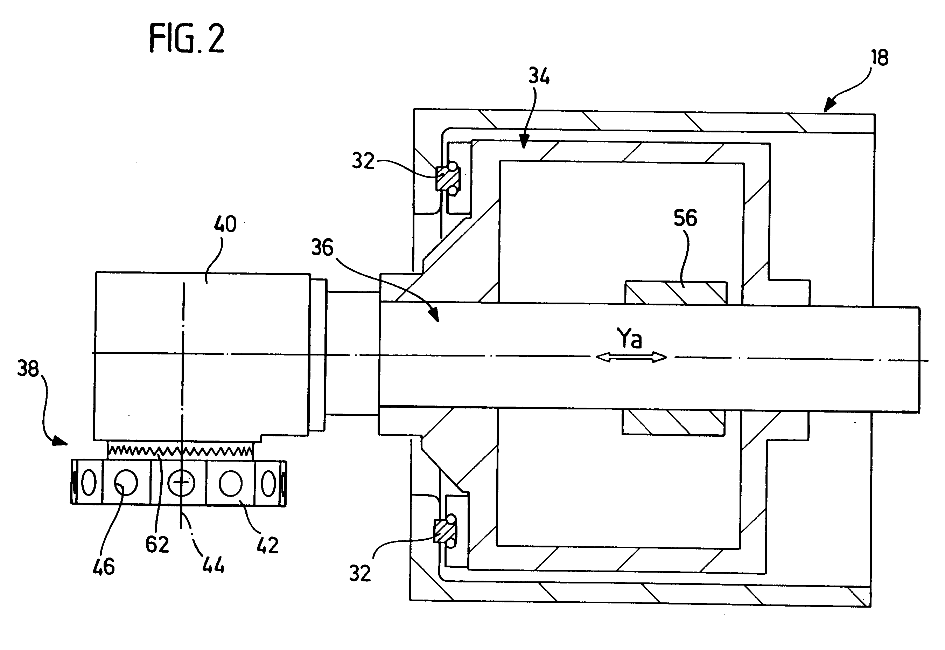

An dem der Werkstückspindelachse 12 zugekehrten Ende des Y-Schlittens 36 ist ein oberer Werkzeugrevolver 38 angebracht, der einen am Y-Schlitten 36 befestigten Revolverkörper 40 (siehe Fig. 2) und einen Revolverkopf 42 umfaßt. Letzterer läßt sich gegenüber dem Revolverkörper 40 um eine Revolverachse 44 verdrehen, am Revolverkörper aber auch gegen ein unerwünschtes Verdrehen sichern, um einerseits jedes beliebige der vom Revolverkopf 42 gehaltenen Werkzeuge in Arbeitsposition bringen, während des Bearbeitens ein unerwünschtes Verdrehen des Revolverkopfs aber verhindern zu können. Wie die Figuren 2 - 4 erkennen lassen, besitzt der dargestellte Revolverkopf 42 zwölf Werkzeugstationen, deren jede eine Werkzeugaufnahme 46 zum Halten eines mit einem Werkzeughalter versehenen Werkzeugs aufweist.

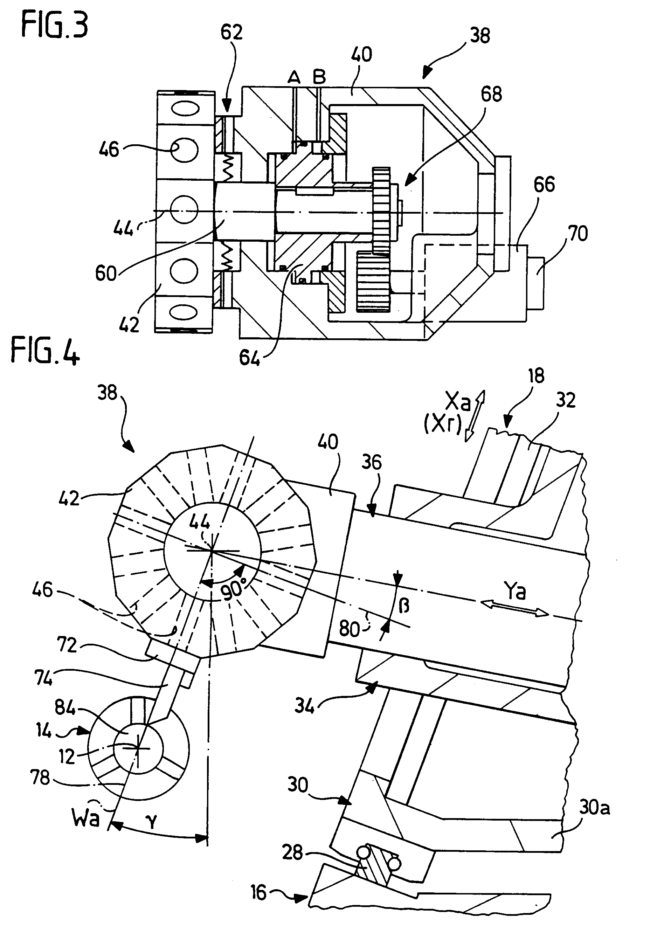

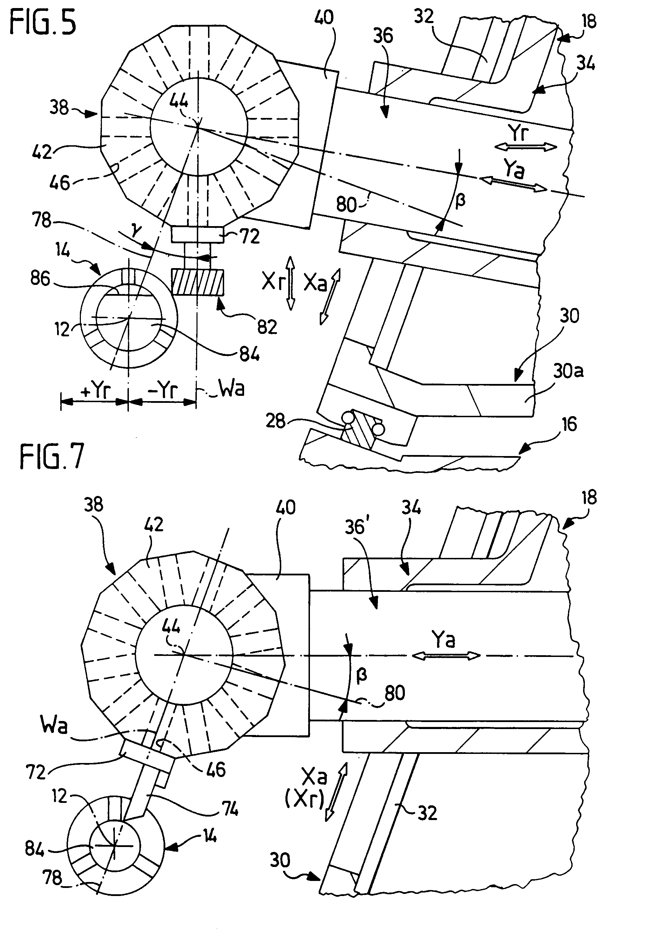

Bei dem oberen Werkzeugrevolver 38 handelt es sich erfindungsgemäß um einen sogenannten Scheibenrevolver, dessen Revolverachse 44 (gegebenenfalls in der Grundstellung der B-Achse, d. h. in der in Fig. 1 dargestellten Drehwinkelposition des Y-Schlittens 36) parallel zur Z-Achse bzw. zur Werkstückspindelachse 12 verläuft und dessen Werkzeugaufnahmen 46 so orientiert sind, daß die in den Figuren 4 und 5 angedeuteten Achsen Wₐ der Werkzeugaufnahmen 46, welche auch die Rotationsachsen angetriebener Bearbeitungswerkzeuge definieren, radial zur Revolverachse 44 verlaufen. Die Achsen Wₐ könnten aber auch - gemäß den Figuren 4 und 5 - seitlich etwas versetzt sein, so daß sie nur parallel zu den Radien verlaufen, jedoch stets senkrecht zur Revolverachse 44 orientiert sind.

Antriebsvorrichtungen zum Verschieben des Z-Schlittens 30 und des X-Schlittens 34 in Richtung der Z-Achse bzw. der Xₐ-Achse wurden nicht dargestellt, da es sich dabei um konventionelle Baugruppen handeln kann. Die Fig. 1 zeigt jedoch eine Antriebsvorrichtung zum Verschieben des Y-Schlittens 36 in Richtung der Yₐ-Achse, welche folgende Bauteile umfaßt: einen vom X-Schlitten 34 gehaltenen Motor 50 und eine am X-Schlitten 34 drehbar gelagerte, axial jedoch unverschieblich gehaltene Kugelrollspindel 52, deren Achse parallel zur Yₐ-Achse verläuft, sowie einen Zahnriementrieb 54 zwischen Motor 50 und Kugelrollspindel 52 und einen Mitnehmer 56, an dem eine auf der Kugelrollspindel 52 laufende Mutter 58 befestigt und der mit dem Y-Schlitten 36 verbunden ist, so daß eine Verschiebung des Mitnehmers 56 in Richtung der Yₐ-Achse eine Verschiebung des Y-Schlittens in Richtung dieser Achse bewirkt.

In Fig. 3 sind diejenigen Mittel gezeigt, mit deren Hilfe sich der Revolverkopf 42 gegenüber dem Revolverkörper 40 um die Revolverachse 44 drehen und am Revolverkörper gegen ein unerwünschtes Verdrehen sichern läßt. Da diese Mittel aber bekannt sind, wurden sie nur schematisch dargestellt und werden im folgenden nur kurz erläutert werden.

Der Revolverkopf 42 ist mit einem wellenförmigen Revolverschaft 60 versehen, mit dem er im Revolverkörper 40 um die Revolverachse 44 drehbar gelagert und am Revolverkörper gehalten ist. Zwischen dem Revolverkopf 42 und dem Revolverkörper 40 befindet sich eine Verriegelung 62, bei der es sich um eine bekannte, zweiteilige HIRTH-Verzahnung handelt und die es erlaubt, den Revolverkopf 42 gegenüber dem Revolverkörper 40 um die Revolverachse 44 zu verdrehen und in einer Vielzahl von Drehwinkelpositionen zu verriegeln. Die Fig. 3 zeigt den Revolverkopf 42 in einer gegen Verdrehen gesicherten axialen Position, und damit sich der Revolverkopf verdrehen läßt, kann er mit Hilfe eines Kolbens 64 eines Hydraulik-Kolben-Zylinder-Systems in Richtung der Revolverachse 44 gemäß Fig. 3 nach links verschoben werden; das Kolben-Zylinder-System ist in beiden Richtungen wirksam, was durch die Drucköl-Anschlüsse A und B angedeutet wurde, so daß sich mit seiner Hilfe der Revolverkopf 42 auch in seine verriegelte Position zurückziehen läßt. Am Revolverkörper 40 ist ein Motor 66 befestigt, durch den und ein Getriebe 68 sich der Revolverschaft 60 und damit der Revolverkopf 42 um die Revolverachse 44 drehen lassen, wenn die Verriegelung 62 unwirksam ist. An den Motor 66 ist schließlich ein Drehwinkelgeber 70 angebaut, mit dessen Hilfe und der nicht dargestellten Maschinensteuerung sich der Revolverkopf 42 in jede beliebige Drehwinkelposition drehen läßt (es muß sich natürlich um eine Drehwinkelposition handeln, in der der Revolverkopf 42 durch die Verriegelung 62 gegen ein unerwünschtes Verdrehen gesichert werden kann).

Die Fig. 4 zeigt den Vorgang des Drehens, d. h. der Bearbeitung eines Werkstücks mit Hilfe eines Drehwerkzeugs, das vom oberen Werkzeugrevolver 38 gehalten wird. Im einzelnen läßt die Fig. 4 erkennen, daß in eine der Werkzeugaufnahmen 46 des Revolverkopfs 42 ein Werkzeughalter 72 eingesetzt ist, der einen Drehmeißel 74 trägt, wobei die bearbeitungswirksame Schneide dieses Drehmeißels auf der Achse Wₐ der dieses Werkzeug haltenden Werkzeugaufnahme 46 liegt. Zur Werkstückbearbeitung durch Drehen wird der Revolverkopf 42 durch Drehen um die Revolverachse 44 so eingestellt und dann verriegelt, daß die dem Drehmeißel 74 zugeordnete Achse Wₐ bezüglich der Werkstückspindelachse 12 radial orientiert ist, so wie dies die Fig. 4 zeigt. Dann wird der Werkzeugrevolver 38 in bezüglich der Werkzeugspindelachse 12 radialer Richtung auf diese Spindelachse vorgeschoben und/oder (nach entsprechender Einstellung des radialen Abstands Werkstückspindelachse - Drehmeißelschneide) in Richtung der Z-Achse verschoben. Zu diesem Zweck werden der X-Schlitten und/oder der Z-Schlitten 30 mit Hilfe ihrer nicht dargestellten Antriebsvorrichtungen verschoben. Nachzutragen ist noch, daß es natürlich zur Erzielung einer bezüglich der Werkstückspindelachse 12 radialen Orientierung der dem Drehmeißel 74 zugeordneten Achse Wₐ gegebenenfalls auch einer Positionierung des Y-Schlittens 36 in Richtung der Yₐ-Achse bedarf.

Die sogenannte Zerspanungsebene, d. h. diejenige Ebene, in der die Schneide des Drehmeißels 74 während des Drehvorgangs bewegt wird, wurde in den Figuren 1 und 4 mit 78 bezeichnet; sie wird durch die Werkstückspindelachse 12 und die im Sinne einer Verkleinerung des Durchmessers eines zu bearbeitenden Werkstücks wirksame Vorschubrichtung des Drehwerkzeugs definiert, bei dem in Fig. 1 dargestellten Drehautomaten also durch die Werkstückspindelachse 12 und die Führungsrichtung der Linearführungen 32 für den X-Schlitten 34.

Während bei herkömmlichen Drehautomaten die Verschieberichtung des Y-Schlittens senkrecht zur Zerspanungsebene verläuft, ist bei dem erfindungsgemäßen Drehautomaten die Längsachse des Y-Schlittens 36, d. h. dessen Verschieberichtung (Yₐ-Achse), gegenüber dem Lot 80 auf die Zerspanungsebene 78 um einen spitzen Winkel β geneigt, und zwar erfindungsgemäß nach oben bzw. derart, daß der Winkel β auf der von der Werkstückspindelachse 12 abgewandten Seite des durch die Revolverachse 44 gezogenen Lots auf die Zerspanungsebene 78 liegt (siehe Figuren 4 und 5). Dies hat bei dem erfindungsgemäßen Drehautomaten zur Folge, daß beim Drehen die Achse Wₐ der mit dem Drehwerkzeug 74 bestückten Werkzeugaufnahme 46 nicht wie bei einem herkömmlichen Drehautomaten senkrecht zur Y-Achse verläuft, vielmehr bildet diese Achse Wₐ mit der Yₐ-Achse beim Drehen einen stumpfen Winkel (siehe Fig. 4). Nur dann benötigt ein Vorschieben des Drehwerkzeugs im Sinne einer Verkleinerung des Werkstückdurchmessers keine Interpolation in der Maschinensteuerung und ein gleichzeitiges Verschieben des X- sowie des Y-Schlittens, was in Fig. 4 dadurch angedeutet wurde, daß die Führungsrichtung Xₐ für den X-Schlitten 34 mit der in herkömmlicher Weise definierten X-Achse (Richtung Xᵣ) zusammenfällt. In Fig. 4 beträgt also der Winkel zwischen der Yₐ-Achse und der Werkzeugachse Wₐ bzw. der Zerspanungsebene 78 (90° + β).

Diese Neigung des Y-Schlittens 36 gegenüber dem Lot auf die Zerspanungsebene 78 führt zu dem Vorteil, daß der Grundkörper 30a des Z-Schlittens 30 ungefähr keilförmig gestaltet werden kann, wie die Fig. 1 erkennen läßt.

Aus dem Stand der Technik sind Werkzeugrevolver bekannt, deren Werkzeugaufnahmen sowohl mit Drehwerkzeugen bestückt werden können, als auch mit drehantreibbaren Bearbeitungswerkzeugen, wie z. B. Fräsern oder Bohrern. Es ist deshalb nicht erforderlich, in den beiliegenden Zeichnungen darzustellen oder zu beschreiben, wie ein solches, vom Revolverkopf 42 getragenes drehantreibbares Bearbeitungswerkzeug angetrieben, d. h. in Rotation um seine Werkzeugachse Wₐ versetzt wird. Ein Werkzeugrevolver, der sich mit drehantreibbaren Bearbeitungswerkzeugen bestücken läßt, ist beispielsweise in der DE-A1-41 25 003 der Firma Index-Werke GmbH & Co. KG Hahn & Tessky beschrieben und dargestellt.

Die Fig. 5 zeigt den Revolverkopf 42 mit einem in eine seiner Werkzeugaufnahmen 46 eingesetzten drehantreibbaren Bearbeitungswerkzeug 82 in Form eines Fräsers, mit dem an einem von der Werkstückspindel gehaltenen Werkstück 84 die in Fig. 5 gezeigte Fläche 86 erzeugt werden soll, die sich parallel zur Werkstückspindelachse 12 erstreckt. Zu diesem Zweck wird die das Werkstück 84 haltende Werkstückspindel festgesetzt, d. h. gegen Verdrehen gesichert, und erfindungsgemäß wird der Revolverkopf 42 um die zur Werkstückspindelachse 12 parallel orientierte Revolverachse 44 so gedreht, daß die Werkzeugachse Wₐ des Werkzeugs 82 bzw. der letzteres haltenden Werkzeugaufnahme 46 des Revolverkopfs 42 mit der für den Drehvorgang definierten Zerspanungsebene 78 einen spitzen Winkel γ bildet, der auf der dem Schlittenbett 16 zugewandten Seite der Zerspanungsebene liegt. Auf diese Weise wird folgendes erreicht:

Wie die Fig. 5 erkennen läßt, muß für die Herstellung der Fläche 86 am Werkstück 84 das Werkzeug 82 in Richtung einer Yᵣ-Achse verschoben werden, die senkrecht zur Werkzeugachse Wₐ des arbeitenden Werkzeugs 82 und senkrecht zur Werkstückspindelachse 12 verläuft. Geht man von einer senkrecht zu der herzustellenden Fläche 86 verlaufenden und die Werkstückspindelachse 12 enthaltenden Ebene aus, zeigt die Fig. 5 eine Situation, gemäß der das Werkzeug 82 relativ zum Werkstück 84 in Richtung der Yᵣ-Achse um einen Weg verschoben wird, der sich aus den Teilstrecken -Yᵣ und +Yᵣ zusammensetzt. Das Herausbewegen des Werkzeugs 82 aus der Zerspanungsebene 78 heraus bis an das gemäß Fig. 5 rechte Ende des Wegbereichs -Yᵣ erfolgt aber nicht durch Verschiebungen des Y-Schlittens 36, sondern durch Verschwenken des Werkzeugs 82 um den Winkel γ, weshalb die Fig. 5 eine Position des Y-Schlittens 36 zeigt, aus der heraus dieser Schlitten nur gemäß Fig. 5 nach links verschoben werden muß, um die Fläche 86 mit Hilfe des Werkzeugs 82 zu erzeugen (natürlich bei gleichzeitiger Verschiebung des X-Schlittens 34 in Richtung der Xₐ-Achse nach unten, wobei die erforderlichen Verschiebebewegungen des X-Schlittens und des Y-Schlittens in der Maschinensteuerung durch Interpolation ermittelt werden müssen). Ein Vergleich der Figuren 4 und 5 läßt nun erkennen, daß der Y-Schlitten 36 aus seiner in Fig. 5 dargestellten rechten Endposition noch weiter nach rechts zurückgezogen werden können müßte, wollte man mit dem Werkzeug 82 in der bisher bekannten Art und Weise arbeiten, nämlich in einer Drehwinkelposition des Revolverkopfs 42, in der die Werkzeugachse Wₐ des Bearbeitungswerkzeugs 82 in der für eine Drehbearbeitung definierten Zerspanungsebene 78 liegt, um eine zu dieser Zerspanungsebene senkrecht und zur Werkstückspindelachse 12 parallel verlaufende Fläche am Werkstück 84 zu erzeugen. Da die Fig. 5 aber die rechte Endposition des Y-Schlittens 36 darstellen soll, müßte in diesem Fall der Abstand des oberen Schlittensystems 18 von der Zerspanungsebene 78 vergrößert werden, was die Eingangs geschilderten Nachteile mit sich brächte. Hingegen macht es die erfindungsgemäß vorgenommene Verschwenkung der Werkzeugachse Wₐ des Bearbeitungswerkzeugs 82 aus der Zerspanungsebene 78 heraus gemäß Fig. 5 nach rechts möglich, den in Fig. 5 gezeigten Wegbereich -Yᵣ durch ein Verschwenken des Revolverkopfs 42 zurückzulegen statt durch ein Verschieben des Y-Schlittens 36 gemäß Fig. 5 nach rechts.

In Fig. 5 ist der Winkel γ größer als der Winkel β, oder allgemein ausgedrückt weichen die Winkel β und γ voneinander ab. Dies hat zur Folge, daß die Vorschubrichtung Yᵣ des Werkzeugs 82 bei der Herstellung der Fläche 86 von der Vorschubrichtung Yₐ abweicht. Hingegen gilt für die Erfindung ganz allgemein, daß die im Sinne einer Verkleinerung des Werkstückdurchmessers wirksame Werkzeug-Vorschubrichtung Xᵣ beim Arbeiten mit einem drehantreibbaren Werkzeug nicht gleich ist der im Sinne einer Verkleinerung des Durchmessers des Werkstücks wirksamen Werkzeug-Vorschubrichtung Xₐ beim Arbeiten mit einem Drehwerkzeug.

Die Fig. 5 läßt auch erkennen, daß für die Erzeugung einer bezüglich der Werkstückspindelachse 12 nicht radial verlaufenden Bohrung mittels eines an die Stelle des Fräsers 82 tretenden Bohrers hinsichtlich des Weges -Yᵣ dasselbe gilt und daß die Achse eines rotierenden Werkzeugs gegenüber der Achse Wₐ für den Fräser 82 auch zur Seite hin parallelverschoben sein kann. Zu fordern ist nur, daß eine solche Achse senkrecht zur Revolverachse 44 orientiert ist.

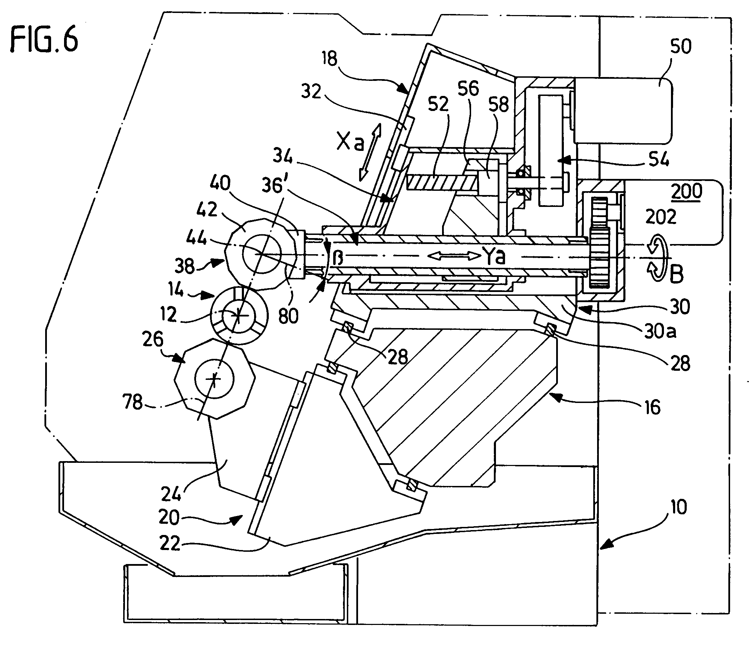

Im folgenden soll nun anhand der Figuren 6 - 9 die zweite, besonders vorteilhafte Ausführungsform des erfindungsgemäßen Drehautomaten beschrieben werden, und da die beiden Ausführungsformen nach den Figuren 1 - 5 einerseits und den Figuren 6 - 9 andererseits nur in der Neigung der Vorschubachse des Y-Schlittens sowie in der Verdrehbarkeit des Werkzeugrevolvers 38 um die Yₐ-Achse oder um eine zu dieser parallelen Achse voneinander abweichen, wurden in den Figuren 6 - 9 dieselben Bezugszeichen verwendet wie in den Figuren 1 - 5, und es erübrigt sich infolgedessen auch, den Aufbau der zweiten Ausführungsform zu beschreiben, sieht man einmal von den vorstehend erwähnten Unterschieden ab.

Zwei unterschiedliche Konstruktionen ergeben sich aber nur dann, wenn der Revolverkopf 42 sich nicht in jeder beliebigen Drehwinkelstellung am Revolverkörper 40 festlegen läßt, so wie dies bei Verwendung einer HIRTH-Verzahnung als Verriegelung 62 der Fall ist. Läßt sich nämlich der Revolverkopf 42 mittels einer anderen geeigneten Verriegelungs- oder Bremsvorrichtung in jeder beliebigen Drehwinkelstellung festlegen, kann, da der Winkel γ dann frei wählbar ist, der Revolverkopf 42 zum Arbeiten mit einem drehantreibbaren Bearbeitungswerkzeug drehwinkelmäßig so positioniert und dann festgelegt werden, daß die Werkzeugachse Wₐ des Bearbeitungswerkzeugs 82 mit der Vorschubachse Yₐ des Y-Schlittens 36 einen rechten Winkel bildet, so wie dies in Fig. 8 dargestellt ist. Wie diese Figur erkennen läßt, kann dann mit Hilfe des als Fräser ausgebildeten Bearbeitungswerkzeugs 82 am Werkstück 84 die Fläche 86 erzeugt werden, indem lediglich der Y-Schlitten 36 in Richtung der Yₐ-Achse verschoben wird.

Bei der in Fig. 8 dargestellten Konstellation fallen wiederum die im Sinne einer Verkleinerung des Werkstückdurchmessers wirksamen Vorschubrichtungen Xₐ für das Drehen (siehe Fig. 7) und Xᵣ für das Arbeiten mit einem rotierenden Werkzeug, wie dem Werkzeug 82, nicht zusammen, während, wie bereits erwähnt, z. B. beim Fräsen einer Fläche, die tatsächliche Vorschubrichtung Yᵣ des rotierenden Werkzeugs quer (was nicht mit senkrecht gleichzusetzen ist) zu der für das Drehen definierten Zerspanungsebene mit der Führungs- und Vorschubrichtung Yₐ des Y-Schlittens 36 zusammenfällt.

Die Ausstattung des erfindungsgemäßen Drehautomaten mit einer B-Achse gewinnt erst für Ausführungsformen Bedeutung, bei denen die Winkel β und γ gleich groß sind; dies ist bei der zweiten Ausführungsform nach den Figuren 6 - 9 der Fall, aber auch bei einer Variante der ersten Ausführungsform nach den Figuren 1 - 5, bei der sich der Revolverkopf 42 auch in einer Drehwinkelstellung festlegen läßt, in der die Werkzeugachse Wₐ eines drehantreibbaren Bearbeitungswerkzeugs senkrecht zur Vorschubachse Yₐ des Y-Schlittens 36 verläuft.

Wie die Fig. 6 zeigt, wurde bei der zweiten Ausführungsform eine B-Achse dadurch realisiert, daß im Y-Schlitten eine den Werkzeugrevolver 38 tragende B-Achswelle 36' um die Yₐ-Achse drehbar, jedoch axial unverschiebbar gelagert ist. Ein B-Achsantrieb zum Drehen der B-Achswelle 36' umfaßt einen am X-Schlitten 34 angebrachten Motor 200 und ein Zahnradgetriebe 202. Die Drehachse (B-Achse) des Werkzeugrevolvers 38 könnte zu der in die Fig. 6 eingezeichneten Yₐ-Achse aber auch nur parallel sein.

Unter Einsatz der B-Achse, die es ermöglicht, die Werkzeugachse Wₐ eines drehantreibbaren Bearbeitungswerkzeugs durch Drehen der B-Achswelle 36' um ihre Längsachse aus der senkrecht zur Werkstückspindelachse 12 verlaufenden Ebene herauszuschwenken, lassen sich dann mit drehantreibbaren Bearbeitungswerkzeugen schräg zur Werkstück- bzw. werkstückspindelachse verlaufende Bohrungen, Flächen und dergleichen erzeugen, wie dies durch die Fig. 9 verdeutlicht werden soll, die das Fräsen einer solchen schrägen Werkstückfläche 86' illustriert. Wie bereits erwähnt, läßt die Fig. 9 einen Spindelstock 100 erkennen, in dem eine Werkstückspindel 102 um die Werkstückspindelachse 12 drehbar und drehantreibbar gelagert ist, deren vorderes, d. h. dem Arbeitsraum des Drehautomaten zugewandtes Ende das Spannfutter 14 trägt, in dem das zu bearbeitende Werkstück 84 eingespannt ist.

Aus dem Vorstehenden ergibt sich, daß es sich bei dem Winkel γ um den Winkel zwischen der Zerspanungsebene 78 eines arbeitenden Drehwerkzeugs und der Werkzeugachse Wₐ eines arbeitenden rotierenden Werkzeugs handelt (in der Grundstellung der B-Achse gemessen in einer senkrecht zur Revolverachse 44 verlaufenden Ebene) und daß der Winkel γ keineswegs identisch sein muß mit dem Winkelabstand der Achsen Wₐ der Werkzeugaufnahmen 46 zweier einander benachbarter, vom Revolverkopf 42 gehaltener Werkzeuge. Wird für den Revolverkopf 42 eine Verriegelung 62 verwendet, die nur einen bestimmten Drehwinkelabstand zwischen einander benachbarten Drehwinkelpositionen des Revolverkopfs 42, in denen sich dieser gegen Verdrehen sichern läßt, erlaubt, so muß der Winkel γ jedoch ein ganzzahliges Vielfaches dieses Drehwinkelabstandes sein.

Aus der vorstehenden Erläuterung der Erfindung sollte klar geworden sein, daß wenn bei der Definition der Erfindung davon die Rede ist, daß ein sich in Arbeitsposition befindliches drehantreibbares Bearbeitungswerkzeug mit seiner Rotationsachse aus der Zerspanungsebene herausgeschwenkt wird, unter dieser Arbeitsposition nicht diejenige Drehwinkelstellung der Werkzeugachse zu verstehen ist, die die Werkzeugachse während des Arbeitens des rotierenden Werkzeugs einnimmt, sondern vielmehr diejenige Drehwinkelstellung der Werkzeugachse bzw. der Achse einer zugehörigen Werkzeugaufnahme des Revolverkopfs, die die Achse eines Drehwerkzeugs während des Arbeitens einnehmen würde. Dies wird dann verständlich, wenn man sich vor Augen hält, daß beim Übergang von einem zu einem anderen, von einem Werkzeugrevolver getragenen, zuvor benutzten bzw. nachfolgend einzusetzenden Werkzeug die Maschinensteuerung den Revolverkopf grundsätzlich zunächst einmal um einen Drehwinkel weiterschaltet, der dem Drehwinkelabstand zweier einander benachbarter Werkzeugaufnahmen des Revolverkopfs oder einem ganzzahligen Vielfachen dieses Drehwinkelabstands entspricht, worauf das erfindungsgemäße Verschwenken der Rotationsachse eines drehantreibbaren Bearbeitungswerkzeugs aus der Zerspanungsebene heraus erfolgt.

Des weiteren ist unter dem in den Ansprüchen verwendeten Begriff "Werkzeugrevolver" nur das um die Revolverachse drehbare und die Werkzeuge tragende Bauelement eines Werkzeugträgers zu verstehen, bei den in der Zeichnung dargestellten Ausführungsformen also der Revolverkopf 42.

Antriebsvorrichtungen für die Werkstückspindel eines Drehautomaten, die der Werkstückspindel eine C-Achse verleihen, sind bekannt, so daß es an sich nicht erforderlich wäre, einen solchen Werkstückspindelantrieb zeichnerisch darzustellen und zu beschreiben. Ebenso sind Vorrichtungen bekannt, mit denen sich die Werkstückspindel in jeder beliebigen Drehwinkellage gegen Verdrehen sichern läßt.

Bezüglich der Antriebsmittel für von einem Werkzeugrevolver gehaltene drehantreibbare Werkzeuge, eines C-Achsenantriebs für eine Werkstückspindel und eines B-Achsenantriebs für einen einen Werkzeugrevolver tragenden Y-Schlitten eines Drehautomaten sei der Vollständigkeit halber noch auf den Stand der Technik nach der EP-A1-0 538 515 der Firma Index-Werke GmbH & Co. KG Hahn & Tessky verwiesen.

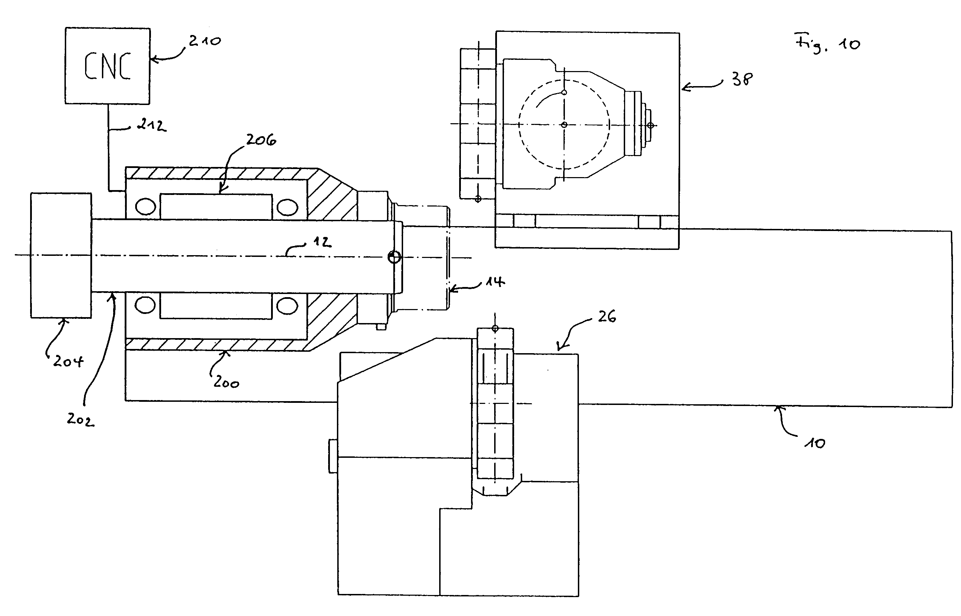

Die Fig. 10 zeigt schematisch das Maschinengestell 10 des Drehautomaten gemäß Fig. 1, wobei nur ein Teil dieses Maschinengestells gezeichnet wurde. An diesem ist ein Spindelstock 200 befestigt, in dem eine um die Werkstückspindelachse 12 drehbare Werkstückspindel 202 axial unverschieblich gelagert ist. Das vordere, gemäß Fig. 10 rechte Ende der Werkstückspindel 202 trägt das Spannfutter 14 zum Halten eines zu bearbeitenden Werkstücks, und am linken Ende der Werkstückspindel 202 läßt die Fig. 10 einen sogenannten Spannzylinder 204 erkennen, mit dem das Spannfutter 14 in üblicher und bekannter Weise betätigt wird, um ein Werkstück einzuspannen und nach der Bearbeitung wieder freizugeben. Die Werkstückspindel 202 soll als sogenannte Motorspindel ausgebildet sein; bei solchen Motorspindeln bildet die Werkstückspindel zusammen mit einem Antriebsmotor 206 eine Baugruppe, der Antriebsmotor ist im Spindelstock 200 untergebracht und umgibt die Werkstückspindel konzentrisch zur Werkstückspindelachse 12. Da solche Antriebsmotoren bekannt sind, bedarf es keiner näheren zeichnerischen Darstellung oder Beschreibung, und es sei nur darauf hingewiesen, daß solche Antriebsmotoren eine konzentrische Anordnung aus einem äußeren Stator und einem innenliegenden Rotor besitzen, wobei letzterer drehfest mit der Werkstückspindel 202 verbunden ist.

Ferner sind in Fig. 10 noch der untere Werkzeugrevolver 26 und der obere Werkzeugrevolver 38 dargestellt.

In Fig. 10 wurde schließlich eine CNC-Steuerung 210 des Drehautomaten gemäß Fig. 1 schematisch dargestellt, welche unter anderem über eine Steuerleitung 212 mit dem Antriebsmotor 206 verbunden ist und es in bekannter Weise ermöglicht, daß der Antriebsmotor 206 die Werkstückspindel 202 nicht nur für eine normale Drehbearbeitung mittels eines nichtrotierenden Drehwerkzeugs antreibt, sondern die Werkstückspindel auch in jeder beliebigen Drehwinkelposition stillsetzt und festhält sowie drehwinkelgesteuert mit niederer Winkelgeschwindigkeit antreibt (Betrieb der Werkstückspindel mit einer sogenannten C-Achse).

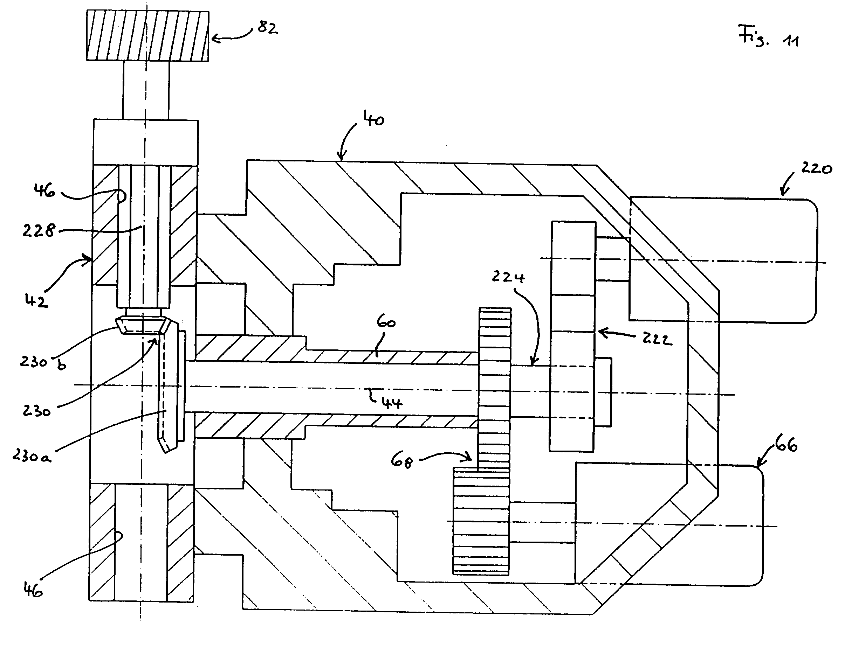

Die Fig. 11 zeigt zunächst die in Fig. 3 dargestellten Teile des oberen Werkzeugrevolvers 38 (allerdings wurde die Verriegelung 62 der Einfachheit halber weggelassen), so daß es insoweit einer Beschreibung der Fig. 11 nicht bedarf. Letztere zeigt aber zusätzlich einen am Revolverkörper 40 befestigten Werkzeugantriebsmotor 220, welcher über ein Getriebe 222 eine zur Revolverachse 44 konzentrische zentrale Werkzeugantriebswelle 224 antreiben kann, die im Revolverschaft 60 drehbar, jedoch axial unverschieblich gelagert ist.

Wie in Fig. 5 (welche in Verbindung mit Fig. 3 zu betrachten ist) dargestellt, zeigt auch die Fig. 11 ein in eine der Werkzeugaufnahmen 46 des Revolverkopfs 42 eingesetztes und als Fräser ausgebildetes drehantreibbares Bearbeitungswerkzeug 82, welches über eine Werkzeugwelle 228 verfügt, die über ein Kegelradgetriebe 230 von der zentralen Werkzeugantriebswelle 224 angetrieben werden kann; zu diesem Zweck ist am gemäß Fig. 11 linken Ende der Antriebswelle 224 ein erstes Kegelrad 230a befestigt, welches bei in den Revolverkopf 42 eingesetztem Bearbeitungswerkzeug 82 mit einem am inneren Ende der Werkzeugwelle 228 befestigten Kegelrad 230b kämmt.

## Patentansprüche

1. Verfahren zum Bearbeiten eines Werkstücks (84) mittels eines drehantreibbaren Bearbeitungswerkzeugs (82) auf einem CNC-Drehautomaten, welcher aufweist einen Spindelstock (100; 200), in dem eine Werkstückspindel (102; 202) zum Halten eines zu bearbeitenden Werkstücks (84) um eine Werkstückspindelachse (12) drehbar gelagert ist, einen ein Festhalten der Werkstückspindel (102; 202) ermöglichenden Werkstückspindelantrieb (206) und ein stationäres Schlittenbett (16), an dem mindestens ein Werkzeugträger-Schlittensystem (18) gehalten ist, welches einen sowohl in Richtung der X-Achse als auch in Richtung der Y-Achse verschiebbaren Schlitten (36; 36') umfaßt, welcher einen Werkzeugträger in Form eines mehrere Werkzeugstationen (46) aufweisenden Werkzeugrevolvers (38, 42) trägt, der um eine zur Z-Achse parallele Revolverachse (44) gesteuert drehbar sowie in einer Vielzahl von Drehwinkelpositionen festlegbar ist und von dessen Werkzeugstationen (46) mindestens eine mit einem senkrecht zur Revolverachse (44) orientierten, durch Drehen des Werkzeugrevolvers (38, 42) in eine Arbeitsposition bringbaren drehantreibbaren Bearbeitungswerkzeug (82) bestückbar ist, wobei Werkstückspindel (102; 202) und Werkzeugrevolver (38, 42) in Richtung der Z-Achse relativ zueinander verschiebbar sind und zur Werkstückbearbeitung der Werkzeugrevolver (38, 42) mit rotierendem sowie seine Ausrichtung beibehaltendem Bearbeitungswerkzeug (82) in einer von der Richtung der Z-Achse abweichenden Richtung verschoben wird und dabei mit dem Bearbeitungswerkzeug auf das Werkstück (84) einwirkt, **dadurch gekennzeichnet**, daß vor dem Arbeiten mit dem drehantreibbaren Bearbeitungswerkzeug (82) der Werkzeugrevolver (38, 42) derart um die Revolverachse (44) gedreht wird, daß die Rotationsachse (Wₐ) des dem Werkstück (84) zugewandten Bearbeitungswerkzeugs mit einer von den Richtungen der Z-Achse (12) und der X-Achse (Xₐ) definierten sowie die Revolverachse (44) enthaltenden Ebene (78) einen spitzen Winkel (γ) bildet, welcher auf der dem Schlittenbett (16) zugewandten Seite dieser Ebene (78) liegt, worauf zur Werkstückbearbeitung die Verschiebung des Werkzeugrevolvers (38, 42) erfolgt.

2. Verfahren nach Anspruch 1, dadurch gekennzeichnet, daß der Werkzeugrevolver (38, 42) derart um die Revolverachse (44) gedreht wird, daß die Werkzeugrotationsachse (Wₐ) senkrecht zur Y-Achse verläuft, und daß zur Werkstückbearbeitung der Werkzeugrevolver in Richtung der Y-Achse oder senkrecht hierzu verschoben wird.

3. CNC-Drehautomat mit einer CNC-Steuerung (210) und einem Spindelstock (100; 200), in dem eine Werkstückspindel (102; 202) zum Halten eines zu bearbeitenden Werkstücks (84) um eine Werkstückspindelachse (12) drehbar gelagert ist, mit einem ein Festhalten der Werkstückspindel (102; 202) ermöglichenden Werkstückspindelantrieb (206) und einem stationären Schlittenbett (16), an dem mindestens ein Werkzeugträger-Schlittensystem (18) gehalten ist, welches einen sowohl in Richtung der X-Achse als auch in Richtung der Y-Achse verschiebbaren Schlitten (36; 36') umfaßt, der einen Werkzeugträger in Form eines mehrere Werkzeugstationen (46) aufweisenden Werkzeugrevolvers (38, 42) trägt, welcher um eine zur Z-Achse parallele Revolverachse (44) gesteuert drehbar sowie in einer Vielzahl von Drehwinkelpositionen festlegbar ist und von dessen Werkzeugstationen (46) mindestens eine mit einem senkrecht zur Revolverachse (44) orientierten, durch Drehen des Werkzeugrevolvers (38, 42) in eine Arbeitsposition bringbaren, um eine Werkzeugrotationsachse (Wₐ) drehantreibbaren Bearbeitungswerkzeug (82) bestückbar ist, wobei Werkstückspindel (102; 202) und Werkzeugrevolver (38, 42) in Richtung der Z-Achse relativ zueinander verschiebbar sind und die durch die Revolverachse (44) verlaufende Richtung der Y-Achse mit dem Lot (80) durch die Revolverachse (44) auf die von der Werkstückspindelachse (12) und der X-Achse definierte Zerspanungsebene (78) auf der dem Schlittenbett (16) zugewandten Seite der Zerspanungsebene (78) einen spitzen Winkel β bildet, welcher auf der von der Werkstückspindelachse (12) abgewandten Seite dieses Lots (80) liegt sowie größer als 0° ist und höchstens 45° beträgt, **dadurch gekennzeichnet**, daß der Drehautomat und seine CNC-Steuerung (210) derart ausgebildet sind, daß für eine außermittige Werkstückbearbeitung mit dem drehantreibbaren Bearbeitungswerkzeug (82), während welcher die Werkzeugrotationsachse (Wₐ) zumindest zeitweise die Werkstückspindelachse (12) nicht schneidet, das Bearbeitungswerkzeug (82) eine Arbeitsposition einnimmt, in der seine Rotationsachse (Wₐ) mit der Zerspanungsebene (78) auf der dem Schlittenbett (16) zugewandten Seite der Zerspanungsebene (78) und des genannten Lots (80) einen spitzen Winkel γ bildet.

4. Drehautomat nach Anspruch 3, dadurch gekennzeichnet, daß der Winkel β 10° bis 30° beträgt.

5. Drehautomat nach Anspruch 3, dadurch gekennzeichnet, daß der Winkel β kleiner als der Drehwinkelabstand zweier einander benachbarter Werkzeugstationen (46) ist.

6. Drehautomat nach Anspruch 5, dadurch gekennzeichnet, daß der Winkel β ungefähr 2/3 dieses Drehwinkelabstands beträgt.

7. Drehautomat nach einem oder mehreren der Ansprüche 3 - 6, dadurch gekennzeichnet, daß die Winkel β und γ gleich groß sind.

8. Drehautomat nach einem oder mehreren der Ansprüche 3 - 7, dadurch gekennzeichnet, daß das Schlittensystem (18) einen am Schlittenbett (16) in Richtung der Z-Achse (12) verschiebbar geführten Bettschlitten (30) mit einem Grundkörper (30a) besitzt, welch letzterer - in Richtung der Z-Achse gesehen - eine ungefähr keilförmige Gestalt aufweist.

9. Drehautomat nach einem oder mehreren der Ansprüche 3 - 8, dessen Schlittensystem (18) einen Y-Schlitten (36; 36') aufweist, dadurch gekennzeichnet, daß der Y-Schlitten (36; 36') als Pinole ausgebildet ist und den Werkzeugrevolver (38, 42) trägt.

10. Drehautomat nach Anspruch 9, gekennzeichnet durch einen Antrieb (200, 202) für ein gesteuertes Drehen des Werkzeugrevolvers (42) um eine zur Y-Achse (Yₐ) parallele Achse, so daß der Werkzeugrevolver (42) mit einer B-Achse versehen ist.

11. Drehautomat nach einem oder mehreren der Ansprüche 8 - 10, dadurch gekennzeichnet, daß der X-Schlitten (34) am Bettschlitten (30) und ein den Werkzeugrevolver (38, 42) tragender Y-Schlitten (36; 36') am X-Schlitten (34) verschiebbar geführt ist.

12. Drehautomat nach einem oder mehreren der Ansprüche 3 - 11, dadurch gekennzeichnet, daß der Werkstückspindelantrieb (206) eine C-Achse aufweist.

## Claims

1. Method for the machining of a workpiece (84) by means of a rotatively drivable machining tool (82) on a CNC automatic lathe comprising a headstock (100; 200), a workpiece spindle (102; 202) for holding a workpiece (84) to be machined being mounted in said headstock for rotation about a workpiece spindle axis (12), a workpiece spindle drive (206) enabling the workpiece spindle (102; 202) to be arrested, and a stationary carriage bed (16), at least one tool carrier carriage system (18) being held on said carriage bed and having a carriage (36; 36') displaceable both in the direction of the X-axis and in the direction of the Y-axis, said carriage bearing a tool carrier in the form of a tool turret (38, 42) having a plurality of tool stations (46), said tool turret being rotatable in a controlled manner about a turret axis (44) parallel to the Z-axis and securable in a plurality of angle of rotation positions, and at least one of the tool stations (46) of said tool turret being equippable with a rotatively drivable machining tool (82) oriented at right angles to the turret axis (44) and adapted to be brought into a working position by turning the tool turret (38, 42), wherein workpiece spindle (102; 202) and tool turret (38, 42) are displaceable relative to one another in the direction of the Z-axis, and for the machining of the workpiece the tool turret (38, 42) is displaced, with the machining tool (82) rotating and maintaining its orientation, in a direction deviating from the direction of the Z-axis while acting on the workpiece (84) with the machining tool, characterized in that prior to work being done with the rotatively drivable machining tool (82) the tool turret (38, 42) is turned about the turret axis (44) in such a manner that the axis of rotation (Wₐ) of the machining tool facing the workpiece (84) forms with a plane (78) defined by the directions of the Z-axis (12) and the X-axis (Xₐ) and containing the turret axis (44) an acute angle (γ) located on the side of this plane (78) facing the carriage bed (16), whereupon the displacement of the tool turret (38, 42) takes place for the machining of the workpiece.

2. Method as defined in claim 1, characterized in that the tool turret (38, 42) is turned about the turret axis (44) in such a manner that the tool axis of rotation (Wₐ) extends at right angles to the Y-axis, and that for the machining of the workpiece the tool turret is displaced in the direction of the Y-axis or at right angles thereto.

3. CNC automatic lathe with a CNC control (210) and a headstock (100; 200), a workpiece spindle (102; 202) for holding a workpiece (84) to be machined being mounted in said headstock for rotation about a workpiece spindle axis (12), with a workpiece spindle drive (206) enabling the workpiece spindle (102; 202) to be arrested, and a stationary carriage bed (16), at least one tool carrier carriage system (18) being held on said carriage bed and having a carriage (36; 36') displaceable both in the direction of the X-axis and in the direction of the Y-axis, said carriage bearing a tool carrier in the form of a tool turret (38, 42) having a plurality of tool stations (46), said tool turret being rotatable in a controlled manner about a turret axis (44) parallel to the Z-axis and securable in a plurality of angle of rotation positions, and at least one of the tool stations (46) of said tool turret being equippable with a machining tool (82) rotatively drivable about a tool axis of rotation (Wₐ) oriented at right angles to the turret axis (44), said machining tool being adapted to be brought into a working position by turning the tool turret (38, 42), wherein workpiece spindle (102; 202) and tool turret (38, 42) are displaceable relative to one another in the direction of the Z-axis, and the direction of the Y-axis extending through the turret axis (44) forms with the normal (80) through the turret axis (44) onto the cutting plane (78) defined by the workpiece spindle axis (12) and the X-axis on the side of the cutting plane (78) facing the carriage bed (16) an acute angle β located on the side of this normal (80) facing away from the workpiece spindle axis (12) and being greater than 0° and at the most 45°, characterized in that the automatic lathe and its CNC control (210) are designed such that for an off-centre machining of the workpiece with the rotatively drivable machining tool (82) during which the tool axis of rotation (Wₐ) does at least for a time not intersect the workpiece spindle axis (12), the machining tool (82) assumes a working position in which on those sides of the cutting plane (78) and of the aforementioned normal (80) facing the carriage bed (16) the tool axis of rotation (Wₐ) forms with the cutting plane (78) an acute angle γ.

4. Automatic lathe as defined in claim 3, characterized in that the angle β is 10° to 30°.

5. Automatic lathe as defined in claim 3, characterized in that the angle β is smaller than the angle of rotation distance between two adjacent tool stations (46).

6. Automatic lathe as defined in claim 5, characterized in that the angle β is approximately 2/3 of this angle of rotation distance.

7. Automatic lathe as defined in any one or several of claims 3 - 6, characterized in that the angles β and γ are the same size.

8. Automatic lathe as defined in any one or several of claims 3 - 7, characterized in that the carriage system (18) has a bed carriage (30) guided on the carriage bed (16) for displacement in the direction of the Z-axis (12) and having a base body (30a), the latter - seen in the direction of the Z-axis - having an approximately wedge-shaped form.

9. Automatic lathe as defined in any one or several of claims 3 - 8, whose carriage system (18) has a Y carriage (36; 36'), characterized in that the Y carriage (36; 36') is designed as a spindle sleeve and carries the tool turret (38, 42).

10. Automatic lathe as defined in claim 9, characterized by a drive (200, 202) for a controlled rotation of the tool turret (42) about an axis parallel to the Y-axis (Yₐ) so that the tool turret (42) is provided with a B-axis.

11. Automatic lathe as defined in any one or several of claims 8 - 10, characterized in that the X carriage (34) is guided for displacement on the bed carriage (30) and a Y carriage (36; 36') carrying the tool turret (38, 42) on the X carriage (34).

12. Automatic lathe as defined in any one or several of claims 3 - 11, characterized in that the workpiece spindle drive (206) has a C-axis.

## Revendications

1. Procédé pour usiner une pièce (84) au moyen d'un outil d'usinage (82) susceptible d'être entraîné en rotation, sur un tour automatique à commande numérique, lequel comprend une contre-poupée (100 ; 200), dans laquelle une broche porte-pièce (102 ; 200) pour tenir une pièce à usiner (84) est montée en rotation autour d'un axe de broche porte-pièce (12), un entraînement de broche (206) permettant un maintien fixe de la broche porte-pièce (102 ; 202) et un sommier à chariot stationnaire (16), sur lequel est maintenu au moins un système de chariot porte-outils (18), qui comprend un chariot (36 ; 36') susceptible d'être déplacé aussi bien dans la direction de l'axe X que dans la direction de l'axe Y, et portant un porte-outils sous la forme d'un barillet à outils (38, 42) qui présente plusieurs stations à outils (46), lequel peut être mis en rotation de façon commandée autour d'un axe de barillet (44) parallèle à l'axe Z et capable d'être fixé dans une pluralité de positions angulaires, l'une de ces stations à outils (46) pouvant être équipée d'au moins un outil d'usinage (82) orienté perpendiculairement à l'axe de barillet (44), susceptible d'être entraîné en rotation et d'être amené dans une position de travail par rotation du barillet à outils (38, 42), ladite broche porte-pièce (102 ; 202) et ledit barillet à outils (38, 42) pouvant être déplacés l'un par rapport à l'autre dans la direction de l'axe Z et, en vue d'usiner la pièce, le barillet à outils (38, 42) est déplacé, avec son outil d'usinage en rotation (82) qui conserve son orientation, dans une direction qui diffère de la direction de l'axe Z et agit ainsi au moyen de l'outil d'usinage sur la pièce (84), caractérisé en ce qu'avant le fonctionnement avec l'outil d'usinage entraîné en rotation (82), le barillet à outils (38, 42) est tourné autour de l'axe de barillet (44) de telle façon que l'axe de rotation (Wa) de l'outil d'usinage tourné vers la pièce (84) forme un angle aigu (γ) avec le plan (78) défini par les directions de l'axe Z (12) et de l'axe X (Xa) et contenant l'axe de barillet (44), cet angle se trouvant sur le côté de ce plan (78) tourné vers le sommier de chariot (16), suite à quoi a lieu le déplacement du barillet à outils (38, 42) en vue de l'usinage de la pièce.

2. Procédé selon la revendication 1, caractérisé en ce que le barillet à outils (38, 42) est tourné autour de l'axe de barillet (44) de telle façon que l'axe de rotation de l'outil (Wa) s'étend perpendiculairement à l'axe Y, et en ce que le barillet à outils est déplacé en direction de l'axe Y, ou bien perpendiculairement à celui-ci, en vue d'usiner la pièce.

3. Tour automatique à commande numérique, comprenant une commande numérique (210) et une contre-poupée (100 ; 200), dans lequel une broche porte-pièce (102 ; 202) pour maintenir une pièce à usiner (84) est montée en rotation autour d'un axe de broche porte-pièce (12), comprenant un entraînement de broche (206) permettant de maintenir de façon fixe la broche porte-pièce (102 ; 202), et un sommier à chariot stationnaire (16), sur lequel est maintenu au moins un système à chariot porte-outils (18), qui comprend un chariot (36 ; 36') capable de se déplacer aussi bien de la direction de l'axe X que dans la direction de l'axe Y, ledit chariot portant un porte-outil sous la forme d'un barillet à outils (38, 42) qui présente plusieurs stations à outils (46), ledit barillet pouvant être tourné de façon commandée autour d'un axe de barillet (44) parallèle à l'axe Z, et pouvant être fixé dans une pluralité de positions angulaires, et parmi lesdites stations à outils (46) l'une au moins peut être équipée d'un outil d'usinage (82) orienté perpendiculairement à l'axe de barillet (44) et susceptible d'être entraîné autour d'un axe de rotation (Wa), et d'être amené dans une position de travail par rotation du barillet à outils (38, 42), ladite broche porte-pièce (102 ; 202) et ledit barillet à outils (38, 42) étant capables de se déplacer l'un par rapport à l'autre dans la direction de l'axe Z, et la direction de l'axe Y qui traverse l'axe de barillet (44) forme un angle aigu β avec la verticale (80) qui traverse l'axe de barillet (44) et tirée sur le plan de coupe (78) défini par l'axe (12) de la broche porte-pièce et par l'axe X, du côté du plan de coupe (78) tourné vers le sommier de chariot (16), ledit angle étant situé du côté de cette verticale (81) détourné de l'axe de la broche (12) porte-pièce et étant compris entre 0° et au maximum 45°, caractérisé en ce que le tour automatique et sa commande numérique (210) sont réalisés de telle façon que, en vue d'usiner une pièce de façon décentrée au moyen de l'outil d'usinage entraîné en rotation (82), pendant lequel l'axe de rotation de l'outil (Wa) ne recoupe pas au moins temporairement l'axe de la broche porte-pièce (12), l'outil d'usinage (82) occupe une position de travail dans laquelle son axe de rotation (Wa) forme un angle aigu γ avec le plan de coupe (78) sur le côté du plan de coupe (78) et de la verticale précitée (80) tourné vers le sommier de chariot (16).

4. Tour automatique selon la revendication 3, caractérisé en ce que l'angle β s'élève de 10° à 30°.

5. Tour automatique selon la revendication 3, caractérisé en ce que l'angle β est inférieur à la distance angulaire entre deux stations à outils (46) voisines à l'une de l'autre.

6. Tour automatique selon la revendication 5, caractérisé en ce que l'angle β s'élève à environ 2/3 de cette distance angulaire.

7. Tour automatique selon l'une ou plusieurs des revendications 3 à 6, caractérisé en ce que les angles β et γ sont égaux.

8. Tour automatique selon l'une ou plusieurs des revendications 3 à 7, caractérisé en ce que le système de chariot (18) possède un chariot de sommier (30) guidé en déplacement sur le sommier à chariot (16) en direction de l'axe Z (12), avec un corps de base (30a), ce dernier présentant une configuration approximativement en forme de coin, vu en direction de l'axe Z.

9. Tour automatique selon l'une ou plusieurs des revendications 3 à 8, dont le système de chariot (18) comprend un chariot Y (36 ; 36'), caractérisé en ce que le chariot Y (36 ; 36') est réalisé sous forme de contre-poupée, et porte le barillet à outils (38, 42).

10. Tour automatique selon la revendication 9, caractérisé par un entraînement (200, 202) pour une rotation commandée du barillet à outils (42) autour d'un axe parallèle à l'axe Y (Ya) de sorte que le barillet à outils (42) est doté d'un axe B.

11. Tour automatique selon l'une ou plusieurs des revendications 8 à 10, caractérisé en ce que le chariot X (34) est guidé en déplacement sur le chariot de sommier (30), et en ce qu'un chariot Y (36 ; 36') qui porte le barillet à outils (38,42) est guidé en déplacement sur le chariot X (44).

12. Tour automatique selon l'une ou plusieurs des revendications 3 à 11, caractérisé en ce que l'entraînement de la broche porte-pièce (206) présente un axe C.
